# EUROPÄISCHE PATENTSCHRIFT

(11) **EP 1 284 179 B1**
(45) Veröffentlichungstag und Bekanntmachung des Hinweises auf die Patenterteilung: **09.03.2005**
(21) Anmeldenummer: 02013662.8
(22) Anmeldetag: 20.06.2002
(51) Int. Cl.: B29C 45/67, F15B 11/032

(54) **Vorrichtung zum Aufbringen der Schliesskraft einer Spritzgiessmaschine, insbesondere zur Herstellung von Schuhen**
Apparatus for applying the closing force in an injection moulding machine, in particular for producing footwear
Dispositif pour appliquer la force de fermeture dans une machine de moulage par injection, notamment pour fabriquer des chaussures

(30) Priorität: 16.08.2001 DE 10140082
(43) Veröffentlichungstag der Anmeldung: 19.02.2003
(73) Patentinhaber: KLÖCKNER DESMA SCHUHMASCHINEN GmbH, 28832 Achim (DE)
(72) Erfinder: Kraemer, Rudolf, 28832 Achim (DE)
(74) Vertreter: Röther, Peter, Dipl.-Phys.

(56) Entgegenhaltungen:
- EP-A- 0 501 384
- EP-A- 0 507 070
- DE-C- 10 120 878
- FR-A- 858 416
- US-A- 3 924 986

## Beschreibung

Die Erfindung betrifft eine Vorrichtung zum Aufbringen der Schließkraft einer Spritzgießmaschine zur Herstellung von Schuhen und Sohlen hierfür, die mindestens ein Formwerkzeug für die zu fertigende bzw. anzuformende Sohle aufweist, dass aus Seitenformteilen, einem vertikal verfahrbaren Bodenstempel und einem Verdränger bzw. einem mit einem Schuhschaft bezogenen Leisten als obere Formhohlraumbegrenzung gebildet ist, mit einer den Bodenstempel verfahrenden Kolbenzylinderanordnung (Bodenstempelzylinder) mit zwei gegeneinander abgedichteten Zylinderräumen, wobei in einem der Zylinderräume ein beidseitig mit Druckluft beaufschlagbarer Kolben verschiebbar ist, während im zweiten Zylinderraum ein einseitig mit einem hydraulischen Druckmedium beaufschlagbarer Kolben verschiebbar ist und beide Kolben starr miteinander verbunden sind, wobei das hydraulische Druckmedium mittels pneumatischen Drucks aus einem mit dem zweiten Zylinderraum verbundenen Reservoir zurückführbar ist, und einem Kraftverstärkungszylinder zum Aufbringen der eigentlichen Schließkraft.

Der Bodenstempelzylinder wird für seinen langen Arbeitshub mit Druckluft aus dem ohnehin vorhandenen Druckluftnetz (Arbeitsdruck beispielsweise 10 bar) betrieben. Lediglich für den kurzen Weg des Krafthubes (beispielsweise 12 mm) wird der Bodenstempelzylinder dann hydraulisch betrieben, wobei ihm aus dem Hydraulikölreservoir die erforderliche Menge von dem Speicher zugeführt wird.

Sobald die Sohle formstabil ist, wird das Hydrauliköl aus dem Bodenstempelzylinder zurück ins Reservoir gefördert, so dass ein geschlossener Kreislauf des Hydrauliköls vorhanden ist, wodurch die Gefahr von Leckagen minimiert ist und die Menge des erforderlichen Hydrauliköls gering gehalten werden kann.

Der Bodenstempelzylinder führt den Arbeitshub mit einer konstanten Kraft (beispielsweise 11kN) aus. Der anschließende Krafthub wird mit einer regelbaren Kraft ausgeführt, die gleich ist oder größer als die Kraft des Arbeitshubes und durch Regelung des pneumatischen Drucks erzeugt wird. Durch die Regelbarkeit lässt sich beim Krafthub ein vorher definiertes, vom Werkstoff abhängiges Kraftprofil abfahren, das beispielsweise zwischen 11 und 165kN liegen kann. Somit bietet das erfindungsgemäße Verfahren steuerungstechnisch und kräftemäßig eine große Bandbreite.

Zur Durchführung des Arbeitshubes wird der im ersten Zylinderraum angeordnete Kolben des Bodenstempelzylinders mittels Druckluft in Richtung Formhohlraum verschoben. Der hierdurch entstehende Hohlraum im zweiten Zylinderraum wird mit Hydraulikflüssigkeit gefüllt. Zur Ausführung des Krafthubes wird dann mittels Druckluft die Hydraulikflüssigkeit im zweiten Zylinderraum unter hohen Druck gesetzt, so dass die erforderlichen Kräfte erreicht werden.

Es ist eine derartige Kombination in der EP-A- 1 260 344 beschrieben. Bei dieser Vorrichtung ist jedoch der Bodenstempelzylinder vom Kraftverstärkungszylinder räumlich getrennt, wodurch eine mehr oder weniger lange Leitung für die zum Schließkraftaufbau erforderliche Hydraulikflüssigkeit erforderlich ist. Neben der nicht auszuschließenden Gefahr, dass hierdurch Hydraulikflüssigkeitsverluste auftreten können, ist der Platzbedarf bei der Vorrichtung gemäß dieser Anmeldung relativ groß.

Aus der EP-A-501384 ist zwar bereits eine ähnliche Zylinderanordnung bekannt, in der Hydraulik und Pneumatik miteinander kombiniert sind und wechselwirken. Allerdings wird diese bekannte Vorrichtung in einer Presse eingesetzt, und die Problematik bei Schuhmaschinen mit mehreren Formstationen keineswegs berücksichtigt.

Auch aus der FR-A- 858 416 ist eine Zylinderanordnung bekannt, bei dem der Kraftverstärkungszylinder an den eigentlichen Bodenstempelzylinder angeflanscht ist, so dass hier die Baugröße der Vorrichtung gegenüber der Vorrichtung, die aus der EP-A- 1 260 344 bekannt ist, verringert ist.

Trotzdem ist diese Vorrichtung noch recht sperrig und somit nicht unbedingt für den Einsatz bei Rundtischanlagen geeignet.

Aus der US-A-3 924 986 ist darüberhinaus eine Maschine zur Herstellung von Schuhen bzw. Sohlen bekannt, aber auch dort sind die spezifischen Probleme, wie sie moderne Schuhmaschinen, die in der Regel als Rundtischanlagen ausgebildet sind, aufwerfen, nicht angesprochen.

Der Erfindung liegt die Aufgabe zugrunde, eine Vorrichtung der eingangs genannten Art so auszugestalten, dass eine erhebliche Reduzierung der Bauteile und der Baugröße der Vorrichtung gewährleistet ist.

Die der Erfindung zugrundeliegende Aufgabe wird gemäß der Merkmalskombination des Patentanspruchs 1 gelöst, wobei die den Bodenstempel verfahrende Kolben-Zylinderanordnung und der Kraftverstärkungszylinder eine bauliche Einheit bilden, die zwei voneinander getrennte Zylinderräume aufweist, wobei in einem der Zylinderräume der beidseitig mit Druckluft beaufschlagbare Kolben angeordnet ist, der in Richtung des zweiten Zylinderraums einen kolbenstangenartigen Fortsatz aufweist, der in einer die beiden Zylinderräume miteinander verbindenden, das Reservoir bildenen Öffnung verschiebbar ist, und im anderen Zylinderraum der einseitig mit dem hydraulischen Druckmedium beaufschlagbare Kolben angeordnet ist, wobei die Druckseite dieses Kolbens mit der Öffnung in Verbindung steht und im unteren Teil dieser Öffnung die von dem Speicher kommende Zuleitung für das hydraulische Druckmedium mündet, wobei der Speicher durch einen in der Zylinderwandung eines der Zylinderräume angeordneten Ringraum gebildet ist, in dem ein mit Druckluft beaufschlagbarer Ringkolben verschiebbar ist.

Der Ringkolben drückt zur Aufbringung der Schließkraft die Hydraulikflüssigkeit über die Zuleitung in die Öffnung zwischen den beiden Zylinderräumen. Nach Füllung dieses Öffnungsraumes drückt dann die kolbenstangenartige Verlängerung des beidseitig mit Druckluft beaufschlagbaren Kolbens die Hydraulikflüssigkeit in den oberen Zylinderraum und verschiebt so den dort vorhandenen Kolben zusammen mit der Kolbenstange, die auf den Bodenstempel wirkt.

Gemäß einer vorteilhaften Ausführungsform ( Anspruch 2) ist die den Bodenstempel verfahrende Kolbenstange des einseitig mit Hydraulikflüssigkeit beaufschlagbaren Kolbens durch den Zylinderraum des beidseitig mit Druckluft beaufschlagbaren Kolbens aus dem Zylinder heraus verlängert und durchsetzt dabei den kolbenstangenartigen Fortsatz und den zugehörigen Kolben, wodurch eine Führung für diesen Kolben gegeben ist.

Die Erfindung wird im folgenden anhand von Zeichnungen dargestellt und näher erläutert.

Es zeigen:

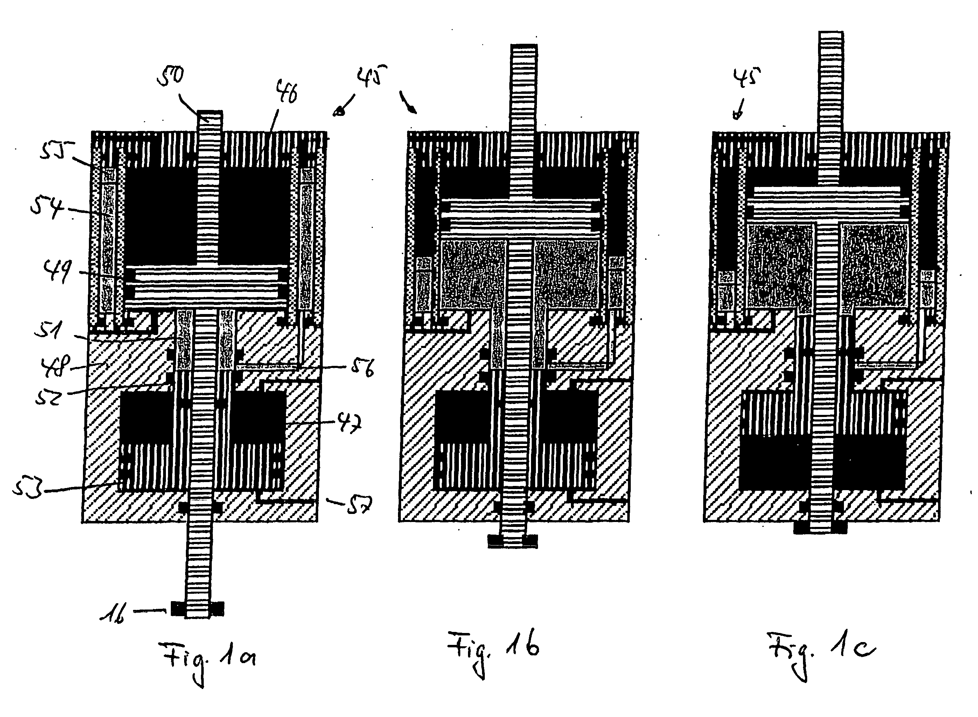

- Fig. 1a bis c:: schematisch die Antriebsvorrichtung für den Bodenstempel einer Spritzgießmaschine in verschiedenen Arbeitszuständen.

In den Figuren 1a bis c ist eine Ausführungsform der Vorrichtung dargestellt, wobei aus Übersichtlichkeitsgründen die Formstation weggelassen worden ist sowie auch die Bauteile der Pneumatik.

Bei dieser Ausführungsform bilden die den Bodenstempel verfahrende Kolbenzylinderanordnung und der Kraftverstärkungszylinder eine Einheit. Diese Zylindereinheit ist mit dem Bezugszeichen 45 versehen. Sie besteht aus zwei Zylinderräumen 46 und 47, die durch eine Zwischenwand 48 voneinander getrennt sind. In dem Zylinderraum 46 ist verschiebbar ein einseitig mit Hydraulikflüssikeit beaufschlagbarer Kolben 49 angeordnet, dessen Kolbenstange 50 an der Anflanschseite des Zylinders 45 zum nicht dargestellten Bodenstempel führt, während die Kolbenstange 50 zur anderen Seite durch eine Öffnung 51 in der Zwischenwand 48 und den zweiten Zylinderraum 47 aus dem Zylinder 45 nach unten ebenfalls herausgeführt ist. Am Ende der Kolbenstange 50 befindet sich die Hubbegrenzung 16.

Im zweiten Zylinderraum 47 ist verschiebbar ein beidseitig mit Druckluft beaufschlagbarer Kolben 53 angeordnet, der einen kolbenstangenähnlichen Fortsatz 52 aufweist, der in die Öffnung 51 hineinreicht, und der zusammen mit dem Kolben 53 auf der Kolbenstange 50 geführt ist.

Der Zylinderraum 46 ist von einem Ringraum 54 umgeben, in dem ein Ringkolben 55 verschiebbar ist. In dem Ringraum 54 befindet sich Hyraulikflüssigkeit, die über eine Zuleitung 56 in die Öffnung 51 mit Hilfe des Ringkolbens 55, der druckmittelbetätigt ist, eindrückbar ist. Die Mündung der Zuleitung 56 befindet sich im unteren Bereich der Öffnung 51, so dass in der Ausgangsstellung des Kolbens 53 die Stirnseite des kolbenstangenartigen Fortsatzes 52 des Kolbens 53 die Mündung der Zuleitung 56 nicht abdeckt.

Die Wirkungsweise dieser Zylindereinheit 45 ist folgende:

In der Fig. 1a ist die Ausgangsstellung dargestellt. Der Kolben 53 befindet sich in seiner unteren Stellung ebenso wie der Kolben 49. Der Ringkolben 55 befindet sich in seiner obersten Grundstellung. Zur Ausführung des Arbeitshubes wird nun der Ringkolben 55 mit Druckluft beaufschlagt, wodurch er die Hydraulikflüssigkeit im Ringraum 54 über die Zuleitung 56 und die Öffnung 51 unter den Kolben 49 im Zylinderraum 46 drückt, wodurch der Kolben 49 angehoben wird und mittels der Kolbenstange 50 der Bodenstempel in Schließstellung gefahren wird (Fig. 1b). Durch Beaufschlagung des Kolbens 53 mit Druckluft über die Druckluftleitung 57 wird nun der Kolben 53 nach oben gefahren, wodurch der kolbenstangenartige Fortsatz 52 weiter in die Öffnung 51 eindringt, dabei die Mündung der Zuleitung 56 für die Hydraulikflüssigkeit schließt und die in der Öffnung 51 vorhandene Hydraulikflüssigkeit aus der Öffnung 51 in den Zylinderinnenraum 46 verdrängt, wodurch der für die Schließkraft der Form erforderliche Krafthub erfolgt (Fig. 1c).

## Patentansprüche

1. Vorrichtung zum Aufbringen der Schließkraft einer Spritzgießmaschine zur Herstellung von Schuhen und Sohlen hierfür, die mindestens ein Formwerkzeug für die zu fertigende bzw. anzuformende Sohle aufweist, das aus Seitenformteilen, einem vertikal verfahrbaren Bodenstempel und einem Verdränger bzw. einem mit einem Schuhschaft bezogenen Leisten als obere Formhohlraumbegrenzung gebildet ist, mit einer den Bodenstempel verfahrenden Kolben-Zylinderanordnung (45) mit zwei gegeneinander abgedichteten Zylinderräumen (46, 47), wobei in einem der Zylinderräume (47) ein beidseitig mit Druckluft beaufschlagbarer Kolben (53) verschiebbar ist, während im zweiten Zylinderraum (46) ein einseitig mit einem hydraulischen Druckmedium beaufschlagbarer Kolben (49) verschiebbar ist, wobei das hydraulische Druckmedium mittels pneumatischen Drucks aus einem mit dem zweiten Zylinderraum (46) verbundenen Reservoir in diesen hineindrückbar und aus diesem in das Reservoir (54) zurückführbar ist, und einem Kraftverstärkungszylinder zum Aufbringen der eigentlichen Schließkraft, wobei die Kolbenzylinderanordnung, die den Bodenstempel verfährt und der Kraftverstärkungszylinder eine bauliche Einheit (45) bilden, die zwei voneinander getrennte Zylinderräume (46, 47) aufweist, wobei in einem der Zylinderräume (47) der beidseitig mit Druckluft beaufschlagbare Kolben (53) angeordent ist, der in Richtung des zweiten Zylinderraums (46) einen kolbenstangenartigen Fortsatz (52) aufweist, der in einer die beiden Zylinderräume (46, 47) miteinander verbindenden, das Reservoir bildenden Öffnung (51) verschiebbar ist und im anderen Zylinderraum (46) der einseitig mit dem hydraulischen Druckmedium beaufschlagbare Kolben (49) angeordnet ist,wobei die Druckseite dieses Kolbens (49) mit der Öffnung (51) in Verbindung steht und im unteren Teil dieser Öffnung (51) die von dem Speicher kommende Zuleitung (56) für das hydraulische Druckmedium mündet, wobei das Reservoir (54) durch einen in der Zylinderwandung eines der Zylinderräume (46) angeordneten Ringraum (54) gebildet ist, in dem ein mit Druckluft beaufschlagbarer Ringkolben (55) verschiebbar ist.

2. Vorrichtung nach Anspruch 1, **dadurch gekennzeichnet, dass** die den Bodenstempel verfahrende Kolbenstange (50) des einseitig mit Hydraulikflüssigkeit beaufschlagbaren Kolbens (49) durch den Zylinderraum (47) des beidseitig mit Druckluft beaufschlagbaren Kolbens (53) aus dem Zylinder (45) heraus verlängert ist und dabei den kolbenstangenartigen Fortsatz (52) und den zugehörigen Kolben (53) durchsetzt, wodurch eine Führung für diesen Kolben (53) gegeben ist.

## Claims

1. A device for applying the closing force to an injection moulding machine for making shoes and soles therefor, having at least one mould for the sole to be made or moulded on, this mould being formed by side mould parts, a vertically movable bottom mould, and a displacement means or a last associated with a shoe upper as the upper delimitation of the mould cavity, having a piston-and-cylinder arrangement (45) which moves the bottom mould and has two cylinder spaces (46, 47) sealed from one another, with a piston (53) which may be acted upon from both sides with compressed air being displaceable in one of the cylinder spaces (47) while a piston (49) which may be acted upon from one side with a hydraulic pressurised medium is displaceable in the second cylinder space (46), it being possible to push the hydraulic pressurised medium out of a reservoir connected to the second cylinder space (46) and into the latter and to return it out of the latter back into the reservoir (54) by means of pneumatic pressure, and having a force-amplifying cylinder for applying the actual closing force, with on the one hand the piston-and-cylinder arrangement which moves the bottom mould and on the other the force-amplifying cylinder forming a structural unit (45) which has two mutually separated cylinder spaces (46, 47), with the piston (53) which may be acted upon from both sides with compressed air being arranged in one of the cylinder spaces (47) and having an extension piece (52) shaped in the manner of a piston rod in the direction of the second cylinder space (46), this extension piece (52) being displaceable in an opening (51) which forms the reservoir and connects the two cylinder spaces (46, 47) to one another, and the piston (49) which may be acted upon from one side with the hydraulic pressurised medium being arranged in the other cylinder space (46), with the pressure side of this piston (49) being in communication with the opening (51) and with the supply line (56) for the hydraulic pressurised medium that comes from the reserve opening into the lower part of this opening (51), with the reservoir (54) being formed by an annular space (54) which is arranged in the cylinder wall of one of the cylinder spaces (46) and in which an annular piston (55) which may be acted upon by compressed air is displaceable.

2. A device according to Claim 1, **characterised in that** the piston rod (50) of the piston (49) which may be acted upon from one side with hydraulic fluid moves the bottom mould and is lengthened beyond the cylinder (45) by the cylinder space (47) of the piston (53) which may be acted upon from both sides with compressed air, and so passes through the extension piece (52) shaped in the manner of a piston rod and the associated piston (53), as a result of which a guide is provided for this piston (53).

## Revendications

1. Dispositif pour appliquer la force de fermeture d'une presse d'injection, pour la fabrication de chaussures et semelles pour celles-ci, qui présente au moins un outil de moulage pour la semelle à fabriquer ou à mouler, qui est constitué de parties de moule latérales, d'un poinçon de fond, mobile verticalement et d'un dispositif de déplacement ou d'un embauchoir, garni d'une tige de chaussure en tant que limitation supérieure de la cavité de moule, avec un agencement piston - cylindre (45), qui déplace le poinçon de fond, avec deux chambres de cylindre (46, 47), étanches l'une par rapport à l'autre, dans lequel, dans l'une des chambres de cylindre (47), un piston (53), pouvant être alimenté des deux côtés en air comprimé est déplaçable, alors que, dans la deuxième chambre de cylindre (46), un piston (49), pouvant être alimenté d'un seul côté avec un agent de pression hydraulique est déplaçable, l'agent de pression hydraulique pouvant être expulsé, au moyen d'une pression pneumatique, à partir d'un réservoir, relié à la deuxième chambre de cylindre (46), dans celle-ci et ramené hors de celle-ci dans le réservoir (54) et avec un vérin amplificateur de puissance, destiné à appliquer la véritable force de fermeture, l'agencement piston - cylindre, qui déplace le poinçon de fond et le vérin amplificateur de puissance constituant une unité structurelle (45), qui présente deux chambres de cylindre (46, 47), séparées l'une de l'autre, dans lequel, dans l'une des chambres de cylindre (47), le piston (53), pouvant être alimenté des deux côtés en air comprimé est disposé, piston qui présente, dans la direction de la deuxième chambre de cylindre (46), un prolongement de type tige de piston (52), qui est déplaçable dans une ouverture (51), qui relie les deux chambres de cylindre (46, 47) entre elles et qui forme le réservoir et dans l'autre chambre de cylindre (46), qui est agencée avec le piston (49), pouvant être alimenté d'un seul côté avec l'agent de pression hydraulique, le côté pression de ce piston (49) étant en liaison avec l'ouverture (51) et la conduite d'amenée (56), venant du réservoir pour l'agent de pression débouchant dans la partie inférieure de cette ouverture (51), le réservoir (54) étant formé par un espace annulaire (54), agencé dans la paroi de cylindre de l'une des chambres de cylindre (46), dans laquelle un piston annulaire (55), pouvant être alimenté en air comprimé, est déplaçable.

2. Dispositif selon la revendication 1, **caractérisé en ce que** la tige de piston (50), qui déplace le poinçon de fond, du piston (49), pouvant être alimenté en fluide hydraulique, est prolongée à partir du cylindre (45), par la chambre de cylindre (47) du piston (53), pouvant être alimenté en air comprimé des deux côtés et traverse, ce faisant, le prolongement (52) de type tige de piston et le piston associé (53), assurant un guidage pour ce piston (53).
